# FASCICULE DE BREVET EUROPEEN

(11) **EP 3 555 500 B1**
(45) Date de publication et mention de la délivrance du brevet: **30.12.2020**
(21) Numéro de dépôt: 17808552.8
(22) Date de dépôt: 13.11.2017
(51) Int. Cl.: F16H 61/688, F16H 61/28

(54) **PROCEDE DE CALCUL DE POSITIONS POUR LA SYNCHRONISATION D'UNE BOITE DE VITESSES A DOUBLE EMBRAYAGE**
VERFAHREN ZUR BERECHNUNG VON POSITIONEN ZUM SYNCHRONISIEREN EINES DOPPELKUPPLUNGSGETRIEBES
METHOD FOR CALCULATING POSITIONS FOR SYNCHRONISING A DUAL-CLUTCH TRANSMISSION

(30) Priorité: 13.12.2016 FR 1662352
(43) Date de publication de la demande: 23.10.2019
(73) Titulaire: PSA Automobiles SA, 78300 Poissy (FR)
(72) Inventeur: SCHAEFFER, Eric, 75013 Paris (FR)
(86) Numéro de dépôt international: PCT/FR2017/053092
(87) Numéro de publication internationale: WO 2018/109292

(56) Documents cités:
- EP-A1- 1 887 258
- DE-A1- 19 953 937
- DE-A1-102008 043 385
- FR-A1- 2 979 405

## Description

La présente invention concerne un procédé de calcul des positions de points particuliers de manchons de synchronisation d'une boîte de vitesses à double embrayage, ainsi qu'un véhicule automobile comportant des moyens mettant en œuvre un tel procédé de calcul. Un exemple d'un tel procédé est connu du document FR 2 979 405 A1.

Les boîtes de vitesses à double embrayage comportent deux arbres d'entrée concentriques reliés chacun au moteur thermique par un embrayage. Chaque arbre d'entrée est relié à l'arbre de sortie par un ensemble de rapports de vitesse paire ou impaire, qui constitue une demi-boîte.

Pendant le roulage sur un rapport de vitesse avec son embrayage d'entrée fermé transmettant le couple du moteur, on peut préparer l'engagement d'un rapport de vitesse suivant supérieur ou inférieur, commandé par l'autre embrayage, en laissant cet embrayage ouvert, et en engageant le rapport suivant par le déplacement d'un manchon de synchronisation.

Le manchon de synchronisation réalise d'abord une synchronisation de la vitesse de l'arbre d'entrée en fonction de la vitesse du véhicule, puis un pré-engagement du rapport suivant. On réalise ensuite une bascule progressive du couple moteur du premier sur le deuxième embrayage, pour obtenir le changement de rapport en maintenant une transmission du couple moteur aux roues motrices.

Le manchon de synchronisation peut être commandé par des actionneurs électriques ou hydrauliques, comportant une commande indépendante pour chaque manchon, ou une commande regroupée pour plusieurs manchons avec par exemple un barillet rotatif comprenant un profil de came.

Il est connu du document US 2013/0190134 un procédé de pilotage des embrayages d'une boîte de vitesses à double embrayage. Le procédé décrit dans ce document comprend une étape qui consiste à adapter les courbes caractéristiques de positions des embrayages, en pré-engageant ces deux embrayages de la boite de vitesses lorsque les arbres secondaires de la boîte de vitesses ne transmettent pas de couple. De la sorte, le contrôle des embrayages est amélioré et l'agrément lors du passage des vitesses est amélioré.

Cependant, le document US 2013/0190134 ne propose à aucun moment de calculer des positions de points particuliers de manchons de synchronisation d'une boîte de vitesses à double embrayage, pour un meilleur agrément du passage des rapports en évitant des bruits, ainsi qu'une réduction des usures.

La présente invention a notamment pour but d'éviter ces inconvénients de la technique antérieure.

Elle propose à cet effet un procédé de calcul des positions de points particuliers de manchons de synchronisation d'une boîte de vitesses à double embrayage entraînée par un moteur d'un véhicule, cette boîte comportant deux demi-boîtes commandées chacune par un embrayage, ce procédé étant remarquable en ce que, dans une phase de préparation pour chaque rapport de vitesse engagé d'une demi-boîte, il applique une courbe de consigne de couple moteur comprenant différents paliers de couples fixes, et il engage pendant ces paliers des rapports de l'autre demi-boîte, en mesurant et en mémorisant des positions de points particuliers des manchons de synchronisation pendant ces engagements, et par la suite, lors des phases de roulage du véhicule et pour chaque point particulier, le procédé calcule une position prévisionnelle par comparaison avec la position mémorisée du point particulier correspondant pendant des conditions de roulage similaires et pilote l'embrayage correspondant de sorte que la valeur absolue de la différence entre le couple transmis par l'embrayage et le palier de couple fixe correspondant à la position mémorisée du point particulier correspondant soit inférieure à une valeur déterminée.

Un avantage de ce procédé de calcul est que l'étape de préparation réalisée sur chaque boîte de vitesses, donne pour différents paliers de couples fixes, des valeurs réelles des positions des points particuliers qui prennent en compte notamment les jeux et les flexibilités de cette boîte.

Ensuite lors du roulage en reprenant pour un rapport engagé et un rapport à engager identiques, les points particuliers mesurés pour des couples proches de celui délivré par le moteur, on calcule avec une bonne précision les positions prévisionnelles de ces points qui vont faciliter un travail rapide et en douceur des actionneurs d'engagement des rapports. En outre, la faible différence entre le couple transmis par l'embrayage et le palier de couple fixe permet d'éviter les à-coups lors du passage de vitesse. L'agrément de conduite n'est alors pas perturbé.

On obtient un meilleur agrément du passage des rapports en évitant des bruits, ainsi qu'une réduction des usures.

Le procédé de calcul suivant l'invention peut de plus comporter une ou plusieurs des caractéristiques suivantes, qui peuvent être combinées entre elles.

Avantageusement, la valeur déterminée est de cinq newtons mètres lorsque la valeur du couple transmis par l'embrayage est inférieure à cent newtons mètres.

Avantageusement, la valeur déterminée correspond à cinq pour cents de la valeur du palier de couple fixe correspondant à la position mémorisée du point particulier correspondant lorsque la valeur du couple transmis par l'embrayage est supérieure à cent newtons mètres.

Avantageusement, pour chaque palier de conditions de roulage sur un rapport d'une demi-boîte, il engage tous les rapports de l'autre demi-boîte pour effectuer les mesures des positions des points particuliers.

Avantageusement, les points particuliers comportent un premier point correspondant à la position du manchon en début de synchronisation, un deuxième point correspondant à la position du manchon en fin de synchronisation, et un troisième point correspondant à la position du manchon en fin d'engagement du rapport.

En particulier, dans la phase de préparation le procédé applique aussi pour chaque palier des conditions de vitesse d'entraînement de la boîte de vitesses, et des conditions de température.

Avantageusement, les valeurs du couple moteur fixe des paliers pour chaque rapport engagé comportent au moins quatre valeurs échelonnées allant jusqu'au couple maximum admissible par la boîte de vitesses.

L'invention a aussi pour objet un véhicule automobile équipé d'une boîte de vitesses à double embrayage comprenant des manchons de synchronisation, qui comporte des moyens mettant en œuvre un procédé de calcul des positions de points particuliers de ces manchons comprenant l'une quelconque des caractéristiques précédentes.

L'invention sera mieux comprise, et d'autres buts, caractéristiques, détails et avantages de celle-ci apparaîtront plus clairement dans la description explicative qui va suivre, faite en référence aux dessins annexés donnés uniquement à titre d'exemple illustrant un mode de réalisation de l'invention, et dans lesquels :
- La figure 1 est un schéma d'une boîte de vitesses à double embrayage mettant en œuvre un procédé de contrôle selon l'invention ;
- les figures 2, 3 et 4 sont respectivement un schéma en coupe axiale, un schéma de dessus et un schéma en demi-coupe axiale avec la fourchette, d'un dispositif de synchronisation de cette boîte de vitesses ;
- la figure 5 est un graphique présentant en fonction du temps différentes caractéristiques de fonctionnement de la boîte de vitesses pendant l'engagement d'un rapport ; et
- la figure 6 est un schéma fonctionnel présentant le procédé selon l'invention.

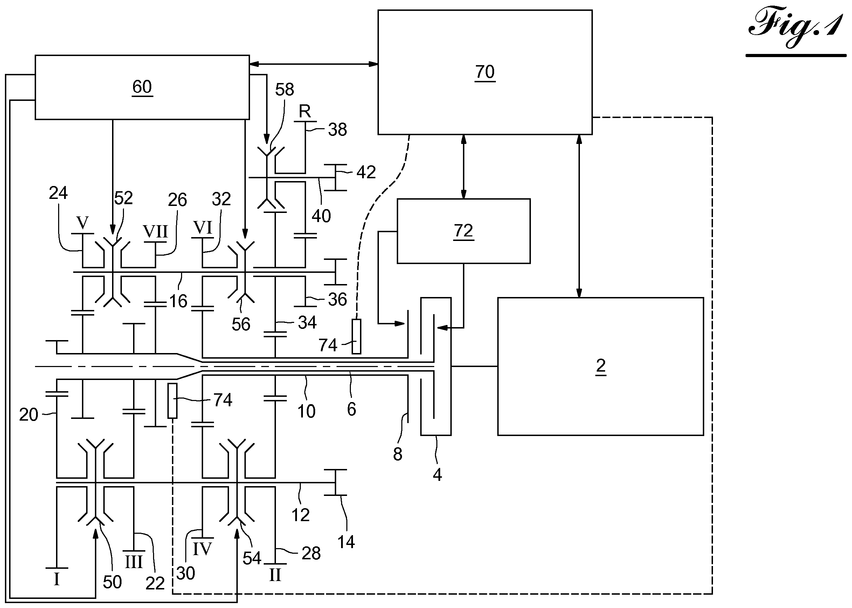

La figure 1 présente un groupe motopropulseur comportant un moteur thermique 2 entraînant une boîte de vitesses à double embrayage comprenant un premier embrayage d'entrée 4 entraînant un premier arbre primaire 6, et un deuxième embrayage d'entrée 8 entraînant un deuxième arbre primaire 10 qui est creux, recevant à l'intérieur ce premier arbre primaire.

La boîte de vitesses comporte un premier arbre secondaire 12 comportant un pignon de sortie 14, un deuxième arbre secondaire 16 comportant un pignon de sortie 18, et un troisième arbre secondaire 40 comportant un pignon de sortie 42. Les différents pignons de sortie 14, 18, 42 sont engagés sur une couronne d'un différentiel non représenté, répartissant le mouvement vers les roues motrices.

Pour former la première demi-boîte comprenant les rapports impairs, le premier arbre secondaire 12 reçoit le mouvement du premier arbre primaire 6 par un premier couple de pignon 20 pour former le premier rapport de vitesse I, et par un troisième couple de pignon 22 pour former le troisième rapport de vitesse III. Le deuxième arbre secondaire 16 reçoit le mouvement du premier arbre primaire 6 par un cinquième couple de pignon 24 pour former le cinquième rapport de vitesse V, et par un septième couple de pignon 26 pour former le septième rapport de vitesse VII.

Un premier manchon de synchronisation 50 disposé sur le premier arbre secondaire 12 entre le premier 20 et le troisième couple de pignon 22, engage alternativement le premier I ou le troisième rapport III. Un deuxième manchon de synchronisation 52 disposé sur le deuxième arbre secondaire 16 entre le cinquième 24 et le septième couple de pignon 26, engage alternativement le cinquième V ou le septième rapport VII.

Pour former la deuxième demi-boîte comprenant les rapports pairs, le premier arbre secondaire 12 reçoit le mouvement du deuxième arbre primaire 10 par un deuxième couple de pignon 28 pour former le deuxième rapport de vitesse II, et par un quatrième couple de pignon 30 pour former le quatrième rapport de vitesse IV. Le deuxième arbre secondaire 16 reçoit le mouvement du deuxième arbre primaire 10 par un septième couple de pignon 32, comportant un pignon commun avec le sixième couple de pignon 30, pour former le septième rapport de vitesse VII.

Un troisième manchon de synchronisation 54 disposé sur le premier arbre secondaire 12 entre le deuxième 28 et le quatrième couple de pignon 30, engage alternativement le deuxième II ou le quatrième rapport IV. Un quatrième manchon de synchronisation 56 disposé sur le deuxième arbre secondaire 16 à droite du septième couple de pignon 32, engage le septième rapport VII.

Le deuxième arbre secondaire 16 comporte un pignon libre 34 engagé avec le premier pignon du deuxième couple de pignon 28, qui est lié à un deuxième pignon libre 36 engagé sur un pignon 38 porté par le troisième arbre secondaire 40. Un cinquième manchon de synchronisation 58 disposé sur le troisième arbre secondaire 40, permet de lier le pignon 38 avec cet arbre pour engager le rapport de marché arrière R.

On obtient la possibilité de rouler sur la première demi-boîte avec les rapports impairs comportant le premier embrayage 4 fermé transmettant le couple moteur, et simultanément d'engager un des rapports pairs pour monter ou descendre un rapport, ou éventuellement trois rapports d'un coup. De la même manière en roulant sur la deuxième demi-boîte avec les rapports pairs comportant le deuxième embrayage 8 fermé, on peut engager simultanément un des rapports impairs.

Un calculateur électronique de contrôle de la transmission 70 recevant des informations de capteurs de vitesse 74 disposés sur chaque arbre primaire 6, 10, et échangeant des informations avec le moteur thermique 2, échange des informations avec un actionneur de synchroniseurs 60 permettant d'actionner individuellement chacun des manchons de synchronisation 50, 52, 54, 56, 58, et avec un actionneur d'embrayage 72 permettant d'actionner individuellement chaque embrayage 4, 8.

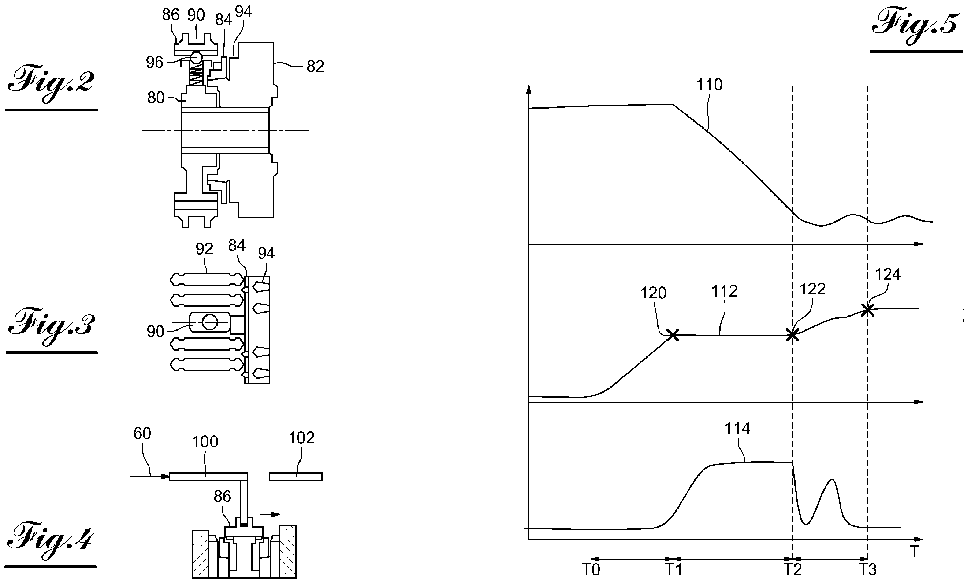

Les figures 2 et 3 présentent un dispositif de synchronisation comportant un moyeu 80 lié par des cannelures intérieures à un arbre secondaire le traversant, et à côté un pignon 82 d'un des rapports de vitesse qui est monté libre sur cet arbre.

Le pignon libre 82 supporte un cône de synchronisation 84, qui est poussé axialement vers la droite par le déplacement d'un manchon de synchronisation 86 recevant dans une rainure circulaire transversale 90 une fourchette de commande non représentée. Un système de billes poussées par des ressorts 96 maintient la position centrale neutre du manchon de synchronisation 86.

Le pignon libre 82 comporte après le cône de synchronisation 84, des dents d'engagement 94 qui lui sont liés.

La figure 4 présente une fourchette de commande 100 déplacée par l'actionneur de synchroniseurs 60, qui est engagée dans la rainure 90 du manchon de synchronisation 86 pour le déplacer axialement. Un capteur de position 102 relié au calculateur de contrôle de la transmission 70, mesure la position axiale de la fourchette 100 pour permettre sa commande.

La figure 5 présente en fonction du temps T lors de l'engagement d'un rapport, des courbes représentant la vitesse 110 de l'arbre primaire, la position 112 de la fourchette 100, et l'effort 114 appliqué par l'actionneur 60 sur cette fourchette.

Au temps T0 on réalise une avance de la fourchette 100. Le manchon de synchronisation 86 comporte des dents axiales intérieures 92 présentant à chaque extrémité une pointe qui va pousser sur une dent du cône de synchronisation 84, pour appliquer son cône sur un cône correspondant du pignon libre 82. Le déplacement qui est contrôlé en vitesse, s'arrête au temps T1 à la position du premier point particulier 120 mesurée par le capteur 102.

On réalise ensuite un contrôle de l'actionneur 60 en effort pour appliquer une pression ajustée sur les cônes de synchronisation, qui va réaliser un essorage de l'huile recouvrant ces cônes, puis un freinage de la vitesse du pignon libre 82 par friction sur ces cônes.

Au temps T2 la vitesse du pignon libre 82 est synchronisée avec celle de son arbre secondaire. On obtient la position du deuxième point particulier 122 mesurée par le capteur 102, qui est assez proche de celle du premier point particulier 120.

Le cône de synchronisation 84 ne reçoit alors plus de couple d'entraînement qui s'oppose à l'avance des pointes avant des dents intérieures 92 du manchon de synchronisation 86. Ce cône 84 peut tourner en dégageant ses dents entre les dents intérieures 92 du manchon de synchronisation 86, ce qui permet l'avance de ce manchon.

Après le temps T2 on a une avance du manchon de synchronisation 86 contrôlée en vitesse, puis l'engagement rapide sur les dents d'engagement 94 qui lie complètement le pignon 82 avec son arbre, se terminant à la position du troisième point particulier 124 mesurée par le capteur 102.

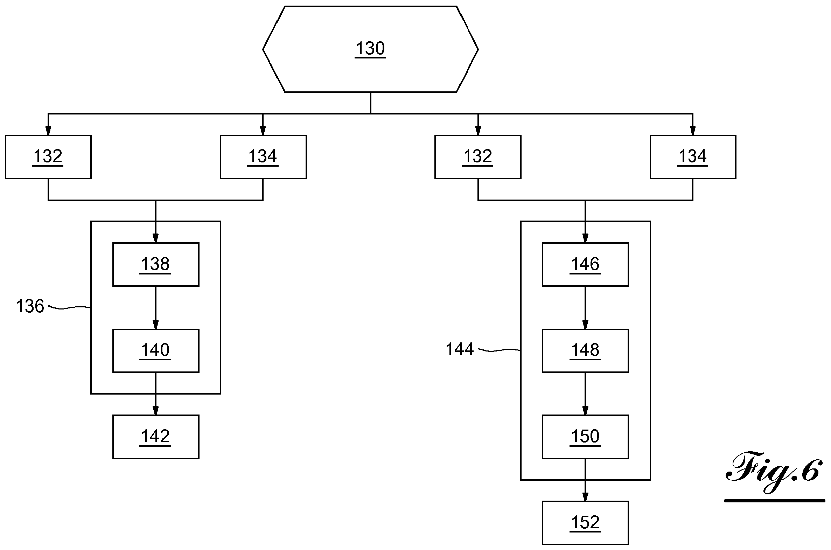

La figure 6 présente une première étape 130 comportant la détermination du rapport de vitesse engagé avec son embrayage fermé, afin de connaître le rapport de vitesse utilisé pour le roulage en cours.

On a ensuite pour la demi-boîte paire 132 ou la demi-boîte impaire 134, des étapes de mise au point 136 réalisées sur banc d'essai en fin de chaîne de montage du véhicule, et des étapes de roulage 144 qui seront réalisées lors du roulage du véhicule.

Les étapes de mise au point 136 comportent successivement pour chacun des rapports de vitesse engagés, une première étape 138 comprenant la courbe de consigne de couple moteur C comportant les paliers. En plus de la consigne de couple moteur, on peut aussi ajuster d'autres conditions comme la vitesse de rotation ou la température de la boîte de vitesses.

On peut en particulier pour une boîte de vitesses acceptant un couple maximum de 300Nm, passer successivement des paliers de couples d'étalonnage de 20, 50, 100, 150, 200 et 300Nm. En complément on peut aussi appliquer un couple d'étalonnage négatif correspondant à l'utilisation du frein moteur.

Pour chacun de ces paliers, on a une deuxième étape 140 comprenant l'apprentissage des positions des points particuliers 120, 122, 124 du manchon de synchronisation 86, pour des engagements de tous les rapports de la demi-boîte qui est libre. Une troisième étape 142 comporte la mémorisation dans le calculateur 70 de ces positions des points particuliers 120, 122, 124 en fonction du couple transmis, pour former des cartographies.

Les étapes de roulage 144 comportent sur le rapport de vitesse engagé, une première étape 146 comprenant la détermination du couple transmis par l'embrayage, en prenant l'information du couple que le moteur 2 délivre.

Au cours d'une deuxième étape 148, le calculateur 70 compare cette valeur du couple transmis par l'embrayage 4, 8 déterminée avec les différents paliers fixes de couples d'étalonnage afin de déterminer quel est le palier fixe le plus proche du couple déterminé transmis par l'embrayage. Puis, le calculateur 70 pilote l'actionneur d'embrayage 72 afin que ce dernier puisse actionner l'embrayage correspondant 4, 8, de manière à rapprocher la valeur du couple transmis par cet embrayage 4, 8 de la valeur du palier fixe correspondant.

En pratique, l'embrayage correspondant 4, 8 est actionné jusqu'à ce que la valeur absolue de la différence entre le couple transmis par l'embrayage 4, 8 et le palier fixe correspondant soit inférieure à cinq newtons mètres si la valeur du couple transmis par l'embrayage 4, 8 est inférieure à cent newtons mètres. Si la valeur du couple transmis par l'embrayage est supérieure à cent newtons mètres, alors l'embrayage correspondant 4, 8 est actionné jusqu'à ce que la valeur absolue de la différence entre le couple transmis par l'embrayage 4, 8 et le palier fixe correspondant soit inférieure à cinq pour cents de la valeur du palier fixe correspondant.

On a ensuite une troisième étape 150 comportant l'utilisation de la cartographie correspondant au rapport engagé et au rapport à engager, pour situer le couple transmis par rapport aux couples d'étalonnage, et en déduire les positions calculées des points particuliers 120, 122, 124 par comparaison avec les positions des points mesurés.

On peut en particulier réaliser une interpolation linéaire sur la courbe des positions mesurées des points particuliers 120, 122, 124 liés aux paliers de couple d'étalonnage 160, pour obtenir les positions calculées des points particuliers correspondant à des couples intermédiaires entre ces paliers.

Dans une quatrième étape 152 on réalise enfin un pilotage des manchons de synchronisation 86 en prenant en compte les positions des points particuliers 1230, 122, 124 calculées, qui seront très proches de la réalité et permettront des engagements rapides et sûrs qui évitent des bruits et des usures anormales du matériel, et préservent une excellente prestation d'agrément longitudinal du véhicule.

Le procédé de contrôle selon l'invention nécessitant seulement des compléments de logiciels, peut être réalisé de manière économique.

## Revendications

1. Procédé de calcul des positions de points particuliers de manchons de synchronisation (86) d'une boîte de vitesses à double embrayage entraînée par un moteur (2) d'un véhicule, cette boîte comportant deux demi-boîtes commandées chacune par un embrayage (4, 8), **caractérisé en ce que**, dans une phase de préparation et pour chaque rapport de vitesse engagé d'une demi-boîte, le procédé applique une courbe de consigne de couple moteur comprenant différents paliers de couples fixes et engage, pendant ces paliers, des rapports de l'autre demi-boîte, en mesurant et en mémorisant des positions de points particuliers (120, 122, 124) des manchons de synchronisation (86) pendant ces engagements, et **en ce que** par la suite, lors des phases de roulage du véhicule et pour chaque point particulier (120, 122, 124), le procédé calcule une position prévisionnelle par comparaison avec la position mémorisée du point particulier (120, 122, 124) correspondant pendant des conditions de roulage similaires et pilote l'embrayage (4, 8) correspondant de sorte que la valeur absolue de la différence entre le couple transmis par l'embrayage et le palier de couple fixe correspondant à la position mémorisée du point particulier (120, 122, 124) correspondant soit inférieure à une valeur déterminée.

2. Procédé de calcul selon la revendication 1, **caractérisé en ce que** la valeur déterminée est de cinq newtons mètres lorsque la valeur du couple transmis par l'embrayage est inférieure à cent newtons mètres.

3. Procédé de calcul selon la revendication 1, **caractérisé en ce que** la valeur déterminée correspond à cinq pour cents de la valeur du palier de couple fixe correspondant à la position mémorisée du point particulier (120, 122, 124) correspondant lorsque la valeur du couple transmis par l'embrayage est supérieure à cent newtons mètres.

4. Procédé de calcul selon l'une quelconque des revendications 1 à 3, **caractérisé en ce que**, pour chaque palier de conditions de roulage sur un rapport d'une demi-boîte engagé, le procédé pré-engage tous les rapports de l'autre demi-boîte pour effectuer les mesures des positions des points particuliers (120, 122, 124).

5. Procédé de calcul selon l'une quelconque des revendications 1 à 4, **caractérisé en ce que** les points particuliers comportent un premier point (120) correspondant à la position du manchon (86) en début de synchronisation, un deuxième point (122) correspondant à la position du manchon (86) en fin de synchronisation, et un troisième point (124) correspondant à la position du manchon (86) en fin d'engagement du rapport.

6. Procédé de calcul selon l'une quelconque des revendications 1 à 5, **caractérisé en ce que**, dans la phase de préparation, le procédé applique aussi pour chaque palier des conditions de vitesse d'entraînement de la boîte de vitesses, et des conditions de température.

7. Procédé de calcul selon l'une quelconque des revendications 1 à 6, **caractérisé en ce que** les valeurs du couple moteur fixe des paliers pour chaque rapport engagé comportent au moins quatre valeurs échelonnées allant jusqu'au couple maximum admissible par la boîte de vitesses.

8. Véhicule automobile équipé d'une boîte de vitesses à double embrayage comprenant des manchons de synchronisation, **caractérisé en ce qu'**il comporte des moyens mettant en œuvre un procédé de calcul des positions de points particuliers (120, 122, 124) de ces manchons (86) selon l'une quelconque des revendications 1 à 7.

## Patentansprüche

1. Verfahren zur Berechnung der Positionen der bestimmten Punkte s Synchronisationshülsen (86) eines Getriebes mit Doppelkupplung von einem Motor angetrieben (2) von einem Fahrzeug, dieser Kasten mit zwei Halbkästen jeweils durch eine Kupplung gesteuert (4, 8), **dadurch gekennzeichnet , dass**, in einer Vorbereitungsphase und für jedes Gangverhältnis durch eine Halbgetriebe in Eingriff, das Verfahren wendet einen Motordrehmomentkurve Sollwert umfasste verschiedene feste Drehmomentniveaus s eingreift , während dieser Schritte , den Berichten der anderen Halbfeld, durch das Messen und Speichern der Positionen von spezifischen Punkten (120, 122, 124) zu synchronisieren Hülsen (86) während dieser Verpflichtungen, und daß durch anschließend während der Phasen der des Fahrzeugs läuft, und für jeden bestimmten Punkt (120, 122, 124), wobei das Verfahren berechnet eine Position nach vorne durch Vergleich mit der einer Position gespeichert zu u bestimmten Punkt (120, 122, 124) entsprechend bei ähnlichen Fahrbedingungen und steuert die entsprechende Kupplung (4, 8) so, dass der Absolutwert der Differenz zwischen dem von der Kupplung übertragenen Drehmoment und der festen Drehmomentstufe der gespeicherten Position des jeweiligen Punktes entspricht ( 120, 122, 124) entspricht, ist kleiner als ein bestimmte Wert.

2. Berechnungsverfahren nach Anspruch 1, **dadurch gekennzeichnet, dass** der ermittelte Wert von fünf Newton Meter , wenn der Wert des Drehmoments durch übertragen der Kupplung kleiner ist als e hundert Newton Meter.

3. Berechnungsverfahren nach Anspruch 1, **dadurch gekennzeichnet, dass** der ermittelte Wert fünf Prozent des Wertes des festen Drehmomentpegels entspricht, der der gespeicherten Position des bestimmten Punktes (120, 122, 124) entspricht, der dem Wert des übertragenen Drehmoments entspricht durch die Kupplung ist mehr als hundert Newtonmeter.

4. Berechnungsverfahren nach einem der Ansprüche 1 bis 3, **dadurch gekennzeichnet**, für jede Stufe der Bedingungen auf einem Zahnrad einer Halbgetriebeantriebs Eingriff, wobei das Verfahren prä- eingreift alle Zahnräder der anderen Hälfte -Kasten zum Messen der Positionen bestimmter Punkte (120, 122, 124) .

5. Berechnungsverfahren nach einem der Ansprüche s 1 bis 4, **dadurch gekennzeichnet, dass** die speziellen Punkte einen ersten Punkt (120) entsprechend der Position der Hülse (86) zu Beginn der Synchronisation, einen zweiten Punkt (122) entspricht , an der Position der Hülse (86) am Ende der Synchronisation und einem dritten Punkt (124), der der Position der Hülse (86) am Ende des Eingriffs des Berichts entspricht.

6. Berechnungsverfahren nach einem der Ansprüche 1 bis 5, **dadurch gekennzeichnet**, in der Vorbereitungsphase , wobei das Verfahren gilt auch für jede Stufe, die Fahrgeschwindigkeit Bedingungen des Getriebes und den Temperaturbedingungen..

7. Berechnungsverfahren nach einem der Ansprüche 1 bis 6, **gekennzeichnet dadurch, dass** die Werte des festen Motordrehmoments der Lager für jeden eingelegten Gang mindestens vier skalierte Werte umfassen, die bis zu dem vom Getriebe maximal zulässigen Drehmoment reichen.

8. Kraftfahrzeug mit einem Doppelkupplungsgetriebe , umfassend Synchronisationshülsen ausgestattet ist, **dadurch gekennzeichnet , daß** sie Mittel umfassen ein Verfahren zur Berechnung der Durchführungs s Position s von bestimmten Punkten (120, 122, 124) davon Hülsen (86) nach einem der Ansprüche 1 bis 7 .

## Claims

1. Method for calculating the positions of particular points of synchronization sleeves (86) of a gearbox with double clutch driven by an engine (2) of a vehicle, this box comprising two half-boxes each controlled by a clutch (4, 8), **characterized in that**, in a preparation phase and for each gear ratio engaged by a half-gearbox , the method applies an engine torque setpoint curve comprising different fixed torque levels s and engages , during these steps , the reports of the other half-box, by measuring and memorizing the positions of specific points (120, 122, 124) synchronizing sleeves (86) during these engagements, and **in that** by subsequently, during the phases of running of the vehicle and for each particular point (120, 122, 124), the method calculates a position forward by comparison with the a position stored to u particular point (120, 122, 124) corresponding during similar driving conditions and controls the corresponding clutch (4, 8) so that the absolute value of the difference between the torque transmitted by the clutch and the fixed torque stage corresponding to the memorized position of the particular point ( 120, 122, 124) corresponding is less than a determined value .

2. Calculation method according to claim 1, **characterized in that** the determined value is five newtons meters when the value of the torque transmitted by the clutch is less than e hundred newtons meters.

3. Calculation method according to Claim 1, **characterized in that** the determined value corresponds to five percent of the value of the fixed torque level corresponding to the stored position of the particular point (120, 122, 124) corresponding when the value of the transmitted torque by the clutch is greater than one hundred newtons meters.

4. Calculation method according to any one of claims 1 to 3, **characterized in that**, for each level of driving conditions on a gear of one half-gearbox engaged, the method pre- engages all the gears of the other half -box for measuring the positions of particular points (120, 122, 124) .

5. Method of calculation according to any one of claims 1 to 4, **characterized in that** the particular points comprise a first point (120) corresponding to the position of the sleeve (86) at the beginning of synchronization, a second point (122) corresponding at the position of the sleeve (86) at the end of synchronization, and a third point (124) corresponding to the position of the sleeve (86) at the end of engagement of the report.

6. Calculation method according to any one of claims 1 to 5, **characterized in that**, in the preparation phase, the method also applies, for each stage, the driving speed conditions of the gearbox, and the temperature conditions.

7. Calculation method according to any one of Claims 1 to 6, **characterized in that** the values of the fixed engine torque of the bearings for each gear engaged include at least four scaled values ranging up to the maximum torque admissible by the gearbox.

8. Motor vehicle equipped with a dual clutch transmission comprising synchronization sleeves, **characterized in that** it comprises means implementing a method for calculating s position s of particular points (120, 122, 124) of these sleeves (86) according to any one of claims 1 to 7.
